# EUROPÄISCHE PATENTSCHRIFT

(11) **EP 3 348 451 B1**
(45) Veröffentlichungstag und Bekanntmachung des Hinweises auf die Patenterteilung: **26.02.2020**
(21) Anmeldenummer: 17210230.3
(22) Anmeldetag: 22.12.2017
(51) Int. Cl.: B62D 5/04

(54) **LENKHILFSVORRICHTUNG EINES KRAFTFAHRZEUGES SOWIE EIN VERFAHREN ZUM ÜBERWACHEN EINER LENKHILFSVORRICHTUNG**
STEERING ASSISTANCE DEVICE OF A MOTOR VEHICLE AND A METHOD FOR MONITORING A STEERING ASSISTANCE DEVICE
DISPOSITIF DE DIRECTION ASSISTÉE POUR UN VÉHICULE AUTOMOBILE AINSI QUE PROCÉDÉ DE SURVEILLANCE D'UN DISPOSITIF DE DIRECTION ASSISTÉE

(30) Priorität: 12.01.2017 DE 102017200429
(43) Veröffentlichungstag der Anmeldung: 18.07.2018
(73) Patentinhaber: VOLKSWAGEN AKTIENGESELLSCHAFT, 38440 Wolfsburg (DE)
(72) Erfinder: Kreis, Christopher, 38126 Braunschweig (DE); Dobberphul, Timo, 38102 Braunschweig (DE); Niehues, Michael, 38108 Braunschweig (DE); Schmidt-Schäfer, Sebastian, 99998 Weinbergen OT Bollstedt (DE)

(56) Entgegenhaltungen:
- WO-A1-2008/052915
- WO-A1-2016/098557
- WO-A1-2016/111866
- DE-A1-102008 041 303
- DE-A1-102014 009 111

## Beschreibung

Die Erfindung betrifft eine Lenkhilfsvorrichtung eines Kraftfahrzeuges gemäß dem Oberbegriff des Anspruchs 1 sowie ein Verfahren zum Überwachen einer Lenkhilfsvorrichtung eines Kraftfahrzeuges.

Aus DE 10 2014 009 111 A1 ist ein elektrisches Servolenksystem vom Zahnstangentyp nach dem Oberbegriff des Anspruchs 1 bekannt, wobei das Servolenksystem einen Servolenkmotor aufweist. Für den Servolenkmotor ist eine vordere Abdeckung mit einem Wellendurchgangsloch für eine Motorwelle vorgesehen. An einer inneren Oberfläche der vorderen Abdeckung benachbart des Wellendurchgangslochs ist ein Feuchtigkeitserfassungssensor angeordnet.

Aus WO 2016/098557 A1 ist ein Wasser-Erfassungs-System zum Erfassen eines Eindringens von Wasser insbesondere in ein Elektro-Hilfskraft-Lenk-Gerät bekannt. Das Wasser-Erfassungs-System umfasst eine Getriebe-Seiten-Einheit mit einem Wasser-Erfassungselement und einem Transmitter und eine davon beabstandete Empfangs-Seiten-Einheit mit einem Empfänger, um vom Transmitter gesendete Signale zu empfangen.

Aus DE 10 2008 041 303 A1 ist eine Servolenkung bekannt, deren Betrieb trotz Wassereinbruch in ein Lenkgetriebegehäuse sicher sein soll. Dazu ist vorgesehen, dass zumindest eine Scheibe oder ein Rad und ein Zugmittel mit Hilfe eines diese zumindest teilweise umschließenden Bauelements vor Zutritt von in das Lenkgetriebegehäuse eindringender Flüssigkeit geschützt ist.

Aus WO 2016/111866 A1 ist ein Lenksystem mit einem Gehäuse bekannt, wobei in dem Gehäuse ein Wassersensor angeordnet ist.

Aus WO 2008/052915 A1 ist eine Lenkvorrichtung, insbesondere eine elektrische Servolenkvorrichtung, mit einer Wassereintrittserkennung bekannt. Die Lenkvorrichtung umfasst ein Gehäuse und ein Motorgehäuse, wobei in dem Motorgehäuse eine elektrische Sensoreinrichtung zur Wassereintrittserkennung angeordnet ist.

Aus DE 10 2015 226 506 A1 ist eine Antriebseinheit für eine Servolenkung bekannt. Bei der Servolenkung handelt es sich um eine als Lenkunterstützung bezeichnete Lenkhilfsvorrichtung, die an einer Lenksäule angreift. Die Antriebseinheit soll jedoch auch für Lenkunterstützungen an Spurstangen und Zahnstangen anwendbar sein. Die Antriebseinheit umfasst einen Motor und ein Steuersystem. Um ein Eindringen von Wasser in ein den Motor und das Steuersystem umgebendes Gehäuse zu detektieren, wird eine Spannung bzw. ein Widerstand zwischen dem Motorgehäuse und weiteren Motorkontakten mittels eines Fehlfunktionsüberwachungsteils überwacht. Das Eindringen von Wasser wird mittels eines im oberen Bereich des Gehäuses unterhalb eines Abdeckelements angeordneten Substrats erfasst. Bei Eindringen von Wasser kann dies dem Fahrer über eine Warnleuchte angezeigt werden. Weitere Maßnahmen zur Detektion von Wasser sind nicht beschrieben.

Aus DE 10 2006 036 214 A1 und DE 10 2009 039 832 B3 sind Lenkgetriebe mit elektromechanischen, als Lenkunterstützungen bezeichneten Lenkhilfsvorrichtungen bekannt. Als Lenkunterstützung dient bei diesen Vorrichtungen ein Elektromotor, der über einen Riementrieb und einen Kugelgewindetrieb mit einer Lenkstange gekoppelt ist und bedarfsweise eine Lenkhilfskraft bzw. ein Lenkhilfsmoment zur Verfügung stellt. Am jeweils tiefsten Punkt eines den Elektromotor umgebenden Motorgehäuses ist bei diesen Lenkhilfsvorrichtungen eine Ablauföffnung vorgesehen, über welche in das Motorgehäuse eingedrungenes Wasser abgeleitet werden kann. In beiden Fällen ist im Bereich der Ablauföffnung ein Ventil angeordnet. Nachteilig an diesen Lenkhilfsvorrichtungen ist, dass im Bereich der Ventile auch eine erhöhte Gefahr des Eindringens von Wasser besteht, die sich mit zunehmender Lebensdauer und einer sich damit einhergehenden vergrößernden Ausfall- bzw. Fehlerwahrscheinlichkeit der Ventile erhöht.
Bei den aus dem Stand der Technik bekannten Lenkvorrichtungen, insbesondere bei solchen mit Riementrieben, werden aktuell kostenintensive Sensoren eingesetzt, um drohende Fehlfunktionen, insbesondere Riemensprünge, detektieren zu können und ggf. einen Kraftfahrzeugführer darauf aufmerksam zu machen, dass das Lenksystem repariert bzw. gewartet werden muss. Derartige Fehlfunktionen, wie z.B. Riemensprünge, werden insbesondere durch Eindringen von Wasser in das Gehäuse einer Lenkhilfsvorrichtung verursacht.

Der Erfindung liegt die Aufgabe zugrunde, eine Lenkhilfsvorrichtung eines Kraftfahrzeuges sowie ein Verfahren zum Überwachen einer Lenkhilfsvorrichtung eines Kraftfahrzeuges zur Verfügung zu stellen, die eine kostengünstige und dennoch zuverlässige Lenkunterstützung eines Kraftfahrzeuges ermöglichen.
Die Lösung der Aufgabe erfolgt erfindungsgemäß mit den Merkmalen der unabhängigen Ansprüche. Weitere praktische Ausführungsformen und Vorteile der Erfindung sind in Verbindung mit den abhängigen Ansprüchen beschrieben.
Eine erfindungsgemäße Lenkhilfsvorrichtung eines Kraftfahrzeuges weist eine sich in Fahrzeugquerrichtung erstreckende Lenkstange und einen Hilfsmotor auf, insbesondere einen radial zu der Lenkstange beabstandet angeordneten Hilfsmotor. Bei diesem Hilfsmotor kann es sich beispielsweise um einen elektrisch betriebenen Motor handeln.
Der Hilfsmotor ist ferner funktional mittels einer Übertragungsvorrichtung mittelbar oder unmittelbar mit der Lenkstange gekoppelt, um bedarfsweise eine Lenkhilfskraft und/oder ein Lenkhilfsmoment auf die Lenkstange zu übertragen. Dabei ist die Übertragungsvorrichtung zumindest teilweise in einem Gehäuse angeordnet, welches sich bis in einen Bereich unterhalb der Übertragungsvorrichtung erstreckt, wobei in dem Gehäuse mindestens ein Mittel zur Detektion von Feuchtigkeit derart angeordnet ist, dass Feuchtigkeit in einem Bodenbereich des Gehäuses detektierbar ist, und in dem Bodenbereich des Gehäuses mindestens eine Ablaufschräge und/oder mindestens ein Fließkanal ausgebildet ist. Das mindestens eine Mittel zur Detektion von Feuchtigkeit ist in einem Feuchtigkeitssammelabschnitt des Gehäuses angeordnet, mindestens zwei Motorkontakte des Hilfsmotors sind in fluidaler Verbindung zu dem
Feuchtigkeitssammelabschnitt oder unmittelbar in dem Feuchtigkeitssammelabschnitt angeordnet, und diese Motorkontakte sind als Mittel zur Detektion von Feuchtigkeit ausgelegt. Von der Erfindung umfasst sind insbesondere folgende Kombinationen aus Hilfsmotor und Übertragungsvorrichtung:
- ein koaxial zu der Lenkstange angeordneter Hohlwellenmotor, der über eine als Übertragungsvorrichtung dienende Kugelgewindemutter und/oder über ein - ggf. zusätzlich zwischengeschaltetes - als Übertragungsvorrichtung dienendes, beliebiges anders gestaltetes Getriebe eine Lenkhilfskraft und/oder ein Lenkhilfsmoment von dem Hohlwellenmotor auf die Lenkstange überträgt,
- eine Übertragungsvorrichtung mit einer Zahnradpaarung, insbesondere mit einer Schneckenwelle und einem Schneckenrad, von denen zumindest ein Zahnradelement mittels eines beliebig gestalteten Hilfsmotors angetrieben ist und das andere Zahnradelement mittelbar oder unmittelbar mit der Lenkstange zusammenwirkt, oder
- eine Übertragungsvorrichtung mit einem Zugmitteltrieb, insbesondere einem Riementrieb, die eine koaxial zu der Lenkstange angeordnete, von einem beliebigen Hilfsmotor angetriebene Motorwelle umfasst, welche über den Zugmitteltrieb mittelbar oder unmittelbar mit der Lenkstange zusammenwirkt.

Eine mittelbare Zusammenwirkung mit der Lenkstange kann auch dadurch erfolgen, dass die Lenkhilfskraft und/oder das Lenkhilfsmoment im Bereich einer Lenksäule eingeleitet wird und über ein aus dem Stand der Technik bekanntes Ritzel oder auf andere Art und Weise von der Lenksäule auf die Lenkstange übertragen wird.

Unter dem Begriff "Feuchtigkeit" werden im Rahmen dieser Offenbarung vor allem Flüssigkeiten verstanden, insbesondere Wasser. Darunter wird aber auch Luft mit einem sehr hohen gasförmigen Wassergehalt verstanden, insbesondere Luft in einer Menge und mit einem Wassergehalt, der bei einer Kondensation - insbesondere aufgrund absinkender Temperatur - zu einer signifikanten Menge flüssigen Wassers kondensieren kann. Damit sind vor allem für ein oder mehrere Elemente der Übertragungsvorrichtung (z.B. einen Riemen als Teil der Übertragungsvorrichtung) kritische Mengen gemeint. Solche Feuchtigkeitsmengen können beispielsweise durch defekte Faltenbälge, die einen Abschnitt der Lenkstange umgeben, und/oder durch undichte Stellen zwischen zwei aneinander angrenzenden, separaten Gehäuseteilen in das Gehäuse eindringen. Durch die geeignete Anordnung von Mitteln zur Detektion von Feuchtigkeit im Bodenbereich des Gehäuses kann die Feuchtigkeit in einfacher Weise detektiert und die Detektion für weitere Maßnahmen genutzt werden. Diese werden im Folgenden noch im Detail erläutert. Der Erfindung liegt die Idee zugrunde, dass eintretende Feuchtigkeit sich, insbesondere in Form von Flüssigkeit, zumindest überwiegend oder vollständig im Bodenbereich des Gehäuses sammelt, so dass in einem Sammelabschnitt des Gehäuses mit einer erfindungsgemäßen Lenkhilfsvorrichtung eine zuverlässige und insbesondere zeitnahe Detektion von Feuchtigkeit ermöglicht wird, insbesondere nachdem sich eine gewisse Mindestmenge an Feuchtigkeit angesammelt hat. Unter einem Bodenbereich des Gehäuses wird dabei der Bereich des Gehäuses mit der - in Fahrzeughochrichtung und in Richtung der Schwerkraft betrachtet - absolut tiefsten Stelle des Gehäuses verstanden. Wenn die Mittel für die Detektion von Feuchtigkeit derart angeordnet und ausgebildet sind, dass in dem Bereich dieser absolut tiefsten Stelle des Bodenbereiches (oder zumindest in einem der tiefer gelegenen Bereiche eines Bodenbereiches mit unterschiedlichen Höhenniveaus) Feuchtigkeit detektiert wird, können bereits sehr geringe Mengen von Feuchtigkeit im Bodenbereich ermittelt werden. Wie im Folgenden noch im Detail erläutert werden wird, kann mit einer derartigen Lenkhilfsvorrichtung die Grundlage für ein kostengünstiges Konzept zur Überwachung der Funktionsfähigkeit der Übertragungsvorrichtung und/oder weiterer Elemente der Lenkhilfsvorrichtung geschaffen werden.

Wie bereits angedeutet, wurde die Erfindung insbesondere für Lenkhilfsvorrichtungen gemacht, bei denen die Übertragungsvorrichtung mindestens ein Riemenrad (üblicherweise zwei Riemenräder) umfasst, wobei das mindestens eine Riemenrad innerhalb des Gehäuses angeordnet ist. Insbesondere kann es sich bei der Übertragungsvorrichtung um ein mit einer Antriebswelle des Hilfsmotors gekoppeltes erstes Riemenrad und um ein mit der Lenkstange gekoppeltes zweites Riemenrad handeln, wobei das erste Riemenrad und das zweite Riemenrad über einen Riemen miteinander verbunden sind. Das zweite Riemenrad kann dabei insbesondere mit einer Kugelgewindemutter verbunden sein, die mit einem Spindelabschnitt der Lenkstange zusammenwirkt. In derartigen Lenkhilfsvorrichtungen sind die Riemenräder üblicherweise in dem Gehäuse angeordnet. Für die vorliegende Erfindung muss zumindest das in Fahrzeughochrichtung betrachtet tiefer angeordnete Riemenrad in dem Gehäuse angeordnet sein. Die Anordnung von Mitteln zur Detektion von Feuchtigkeit ist in den beschriebenen Lenkhilfsvorrichtungen mit mindestens einem Riemenrad besonders vorteilhaft, weil es insbesondere unter (permanenter) Feuchtigkeitsbelastung zu einem plötzlichen Überspringen des Riemens oder sogar zu einem Reißen des Riemens und damit einer plötzlichen Fehlfunktion der Lenkhilfsvorrichtung kommen kann. Eine solche, plötzlich auftretende Fehlfunktion der Lenkhilfsvorrichtung stellt ein Sicherheitsrisiko insoweit dar, als der Fahrer eines Kraftfahrzeuges von den Fehlfunktionen irritiert werden kann, was Fahrfehler zur Folge haben kann. Wie eingangs bereits erwähnt, wird aus diesem Grund bei den bisherigen Lenkhilfesystemen über kostenintensive Sensoren eine kontinuierliche Synchronizität zwischen dem Hilfsmotor und der Lenkwelle überwacht. Es wurde nun festgestellt, dass durch eine geeignete Detektion von Feuchtigkeit in einem Bodenbereich des Gehäuses eine Möglichkeit zur Überwachung und Sicherstellung der korrekten Funktionsfähigkeit einer Lenkhilfsvorrichtung geschaffen werden kann, welche Gefahren gleichwertig erkennt, jedoch deutlich kostengünstiger realisierbar ist. Die Erfindung ermöglicht es insoweit, auf die erwähnten Sensoren zu verzichten, ohne dadurch die Sicherheit zu verringern. Die Detektion erfolgt vorzugsweise in einem Bereich unterhalb des - in Fahrzeughochrichtung und in Schwerkraftrichtung betrachtet - unteren Riemenrades von zwei oder mehr Riemenrädern, so dass in diesem Bereich, wo Feuchtigkeit besonders kritisch ist, eine zuverlässige Detektion erfolgt, insbesondere bevor sich ansammelnde Flüssigkeit den über das untere Riemenrad geführten Riemen erreicht. Vorzugsweise wird Feuchtigkeit in Form von sich ansammelnder Flüssigkeit (in der Regel im Wesentlichen Wasser) detektiert, bevor eine Menge erreicht ist, die zu einer ungewünschten Befeuchtung des Riemens führen könnte.

Eine besonders zuverlässige Detektion ergibt sich dadurch, wenn das mindestens eine Mittel zur Detektion von Feuchtigkeit in dem Feuchtigkeitssammelabschnitt des Gehäuses selbst angeordnet ist, denn in diesem Fall ist das Mittel genau dort angeordnet, wo die Detektion stattfinden soll. Fehlmessungen aufgrund von Verschmutzungen oder sonstigen Einflüssen zwischen dem Mittel und dem Detektionsbereich, wie sie bei optischen und sonstigen, auf Distanz angeordneten Mitteln auftreten können, sind damit ausgeschlossen.

Mindestens zwei Motorkontakte des Hilfsmotors sind in fluidaler Verbindung zu dem Feuchtigkeitssammelabschnitt oder unmittelbar in dem Feuchtigkeitssammelabschnitt angeordnet und diese Motorkontakte sind als Mittel zur Detektion von Feuchtigkeit ausgelegt, so dass - nahezu ohne Mehrkosten - der ohnehin vorhandene Hilfsmotor auch für die Detektion von Flüssigkeit genutzt wird. Zusätzliche Mittel, wie beispielsweise Feuchtigkeitssensoren als Mittel zur Detektion von Feuchtigkeit werden in diesem Fall nicht benötigt. Die Detektion von Feuchtigkeit mit Hilfe der Motorkontakte kann beispielsweise dadurch erfolgen, dass eine relevante elektrische Größe, wie z.B. die Stromstärke und/oder der Widerstand, zwischen zwei miteinander elektrisch gekoppelten Motorkontakten überwacht wird. Wenn die Motorkontakte durch sich im Feuchtigkeitssammelabschnitt ansammelndes Wasser zusätzlich miteinander kurzgeschlossen werden, führt dies zu einer signifikanten Veränderung der überwachten elektrischen Größe, die anzeigt, dass ein entsprechender Mindest-Flüssigkeitsstand in dem Feuchtigkeitssammelabschnitt erreicht ist.

Bevorzugt werden als Mittel zur Detektion von Feuchtigkeit mehrere Motorkontakte derart eingesetzt, dass verschiedene Füllstandshöhen in dem Feuchtigkeitssammelabschnitt detektiert werden können.

Vorzugsweise werden insoweit mindestens zwei Paare, drei Paare oder vier Paare von Motorkontakten als Mittel zur Detektion verwendet. Dabei ist jedes Paar einer bestimmten Phase des Hilfsmotors zugeordnet. Die Motorkontakte sind vorzugsweise kreisförmig angeordnet, insbesondere gleichmäßig über den Umfang des entsprechenden Kreises verteilt.

Erfindungsgemäß ist in dem Bodenbereich des Gehäuses mindestens eine Ablaufschräge und/oder mindestens ein Fließkanal, insbesondere zu einem - in Schwerkraft und in Fahrzeughochrichtung betrachtet - tiefer gelegenen Feuchtigkeitssammelabschnitt des Gehäuses, ausgebildet. Der Feuchtigkeitssammelabschnitt ist dabei vorzugsweise ein Bereich, der sich um den absolut tiefsten Punkt oder Bereich des Gehäuses erstreckt. Besonders bevorzugt ist es, wenn das Gehäuse im gesamten Bodenbereich überall außerhalb eines Feuchtigkeitssammelabschnitts Ablaufschrägen aufweist, so dass in dem Gehäuse ein Bodenbereich, der den absolut tiefsten Punkt des Gehäuses umfasst als Feuchtigkeitssammelabschnitt dient und alle übrigen, höher gelegenen Bodenbereiche Ablaufschrägen aufweisen. Mit Ablaufschrägen sind insbesondere Flächen im Gehäuse gemeint, die eine ausreichende Neigung aufweisen, um etwaig in das Gehäuse eingetretene Feuchtigkeit bzw. Flüssigkeit überwiegend (oder sogar ausschließlich) schwerkraftbedingt durch Abfließen in den Feuchtigkeitssammelabschnitt zu fördern. Das Abfließen kann durch im Fahrbetrieb des Kraftfahrzeuges auftretende Beschleunigungskräfte unterstützt werden. Vor diesem Hintergrund ist es bevorzugt, den Feuchtigkeitssammelabschnitt gegenüber anderen Bodenbereichen des Gehäuses in Fahrzeuglängsrichtung betrachtet vorne anzuordnen, damit die beim Abbremsen eines Kraftfahrzeuges wirkenden negativen Beschleunigungskräfte, welche regelmäßig auftreten und üblicherweise größer sind als die maximal möglichen positiven Beschleunigungskräfte, die Förderung von Flüssigkeit in den Feuchtigkeitssammelabschnitt unterstützen.
Unabhängig von dem vorstehend beschriebenen, die Fahrdynamik ausnutzenden Aspekt ist das Gehäuse vorzugsweise derart gestaltet, dass Flüssigkeit in dem gesamten Gehäuse aufgrund geneigter Flächen, insbesondere Bodenflächen, in Richtung des Feuchtigkeitssammelabschnitts geleitet wird. Dementsprechend ist es vorteilhaft, wenn in dem Gehäuse keine Bodenbereiche oder sonstigen Zwischenabschnitte mit lokalen Vertiefungen oder ebenen bzw. nahezu ebenen Flächen ausgebildet sind, in welchen sich Flüssigkeit sammeln kann. Vorzugsweise sind dementsprechend alle Innenflächen des Gehäuses derart geneigt, dass Flüssigkeit - vorzugsweise auch bei stehendem Kraftfahrzeug - in den Feuchtigkeitssammelabschnitt abfließt.
Als Neigungen für Ablaufschrägen können insbesondere Neigungen ab 1 Prozent, 2 Prozent oder 3 Prozent bereits ausreichend sein. Bevorzugt sind jedoch Neigungen von mindestens 5 Prozent, mindestens 10 Prozent oder sogar mindestens 20 Prozent zumindest in kritischen Bereichen vorgesehen, wo die Ansammlung von Flüssigkeit selbst bei durch die Fahrdynamik des Kraftfahrzeuges verursachten Gegenkräften vermieden werden soll.

Wenn mindestens eine Ablaufschräge und ein Fließkanal vorgesehen sind, so sind vorzugsweise alle an einen Fließkanal angrenzenden Ablaufschrägen in Richtung des Fließkanals geneigt. Ein Fließkanal kann insbesondere in Form einer rinnenartigen Vertiefung oder in Form eines geschlossenen Kanals vorliegen, wie er durch eine Bohrung oder eine im Herstellungsprozess vorgesehene Durchgangsöffnung erzeugt werden kann. Eine Durchgangsöffnung ist vorzugsweise derart angeordnet, dass sie von einem tiefsten Punkt eines ersten Gehäuseabschnitts ausgehend zu einem weiteren Gehäuseabschnitt führt.

Mit einem Fließkanal können insoweit ein Ablaufpfad oder mehrere Ablaufpfade in einem Gehäuse geschaffen werden, über welche Flüssigkeit gezielt zu einem Feuchtigkeitssammelabschnitt gelenkt und gefördert werden kann. Mit einem Fließkanal nach Art einer Durchführung kann Flüssigkeit in einen benachbarten Gehäuseabschnitt geleitet werden, beispielsweise um Flüssigkeit gezielt aus dem Gehäuseabschnitt mit der Übertragungsvorrichtung in einen anderen Gehäuseabschnitt abfließen zu lassen und so die Einwirkung von Feuchtigkeit auf die Übertragungsvorrichtung zu vermeiden. Derartige Maßnahmen können nicht nur einfach in bestehende Fertigungsprozesse implementiert, sondern bedarfsweise auch noch im Wege der Nachrüstung an Bestandskraftfahrzeugen umgesetzt werden.

In einer weiteren praktischen Ausführungsform ist der Feuchtigkeitssammelabschnitt im Bereich des Hilfsmotors angeordnet, insbesondere in einem Gehäuseabschnitt, in welchem der Hilfsmotor oder ein Teil des Hilfsmotors angeordnet ist. Dieser - bei erfindungsgemäßen Lenkhilfsvorrichtungen mit Riementrieb üblicherweise ohnehin vorhandene - Gehäuseabschnitt eignet insoweit besonders für die Nutzung als Feuchtigkeitssammelabschnitt, als die darin angeordneten Elemente im Vergleich zu einer Übertragungsvorrichtung, insbesondere einer Übertragungsvorrichtung in Form eines Riementriebes, relativ unempfindlich gegenüber Flüssigkeiten ist. Wenn der Gehäuseabschnitt durch eine Zwischenwand von dem Gehäuseabschnitt mit der Hilfsvorrichtung separiert ist, ist vorzugsweise mindestens ein als Ablaufpfad gestalteter Fließkanal von diesem Gehäuseabschnitt in den Gehäuseabschnitt mit dem Hilfsmotor vorgesehen.

Zur Vermeidung langfristiger Schäden und zur Erhöhung der Sicherheit des Kraftfahrzeuges und deren Insassen sind an der Übertragungsvorrichtung in einer weiteren praktischen Ausführungsform die Mittel zur Detektion von Feuchtigkeit funktional mit einer Kontroll- und Überwachungseinheit gekoppelt, mittels welcher zumindest das Erreichen eines bestimmten Flüssigkeitsstandes ermittelbar ist. Dies ermöglicht es, nach Erreichen eines kritischen Füllzustandes entsprechende Maßnahmen zu ergreifen, beispielsweise den Fahrer aufzufordern, sofort anzuhalten, möglichst schnell eine Fachwerkstatt aufzusuchen und/oder die Lenkhilfsvorrichtung zu deaktivieren. Bevorzugt ist es, wenn mehrere Füllstände ermittelbar sind und abhängig von dem jeweiligen Füllzustand eine geeignete Maßnahme vorgeschlagen oder sogar erzwungen wird.

Das Erreichen bzw. Überschreiten eines bestimmten Flüssigkeitsstandes kann auch mittels der Kontroll- und Überwachungseinheit optisch, akustisch und/oder haptisch an den Fahrer übermittelt und/oder per Datenübertragung an eine Fachwerkstatt weitergegeben werden.

Optional kann die Kontroll- und Überwachungseinheit auch dazu ausgebildet sind, den Status des Hilfsmotors abhängig von dem Feuchtigkeitsstatus zu verändern. Beispielsweise kann bei Überschreiten eines bestimmten ersten Flüssigkeitsstandes die Leistung des Hilfsmotors zunächst reduziert werden und bei einem späteren Erreichen eines zweiten, höheren Füllstandes der Hilfsmotor vollständig abgeschaltet werden, insbesondere um eine plötzliche Fehlfunktion der Lenkhilfsvorrichtung, beispielsweise aufgrund eines drohenden Riemensprungs, zu vermeiden.

Zu einer wie vorstehend beschriebenen Einflussnahme auf die Lenkhilfsvorrichtung ist die Kontroll- und Überwachungseinheit vorzugsweise funktional mit einem Steuergerät der Lenkhilfsvorrichtung verbunden. So können sowohl die Überwachung als auch etwaige Modifikationen der Leistung des Hilfsmotors zentral mit Hilfe des Steuergerätes vorgenommen werden.

Die Erfindung betrifft auch ein Verfahren zum Überwachen einer wie vorstehend beschriebenen Lenkhilfsvorrichtung, wobei nach dem Erreichen eines bestimmten Flüssigkeitsstandes ein akustisches, optisches und/oder haptisches Signal abgegeben wird und/oder nach Erreichen eines Flüssigkeitsstandes die Leistung des Hilfsmotors gedrosselt oder der Hilfsmotor abgeschaltet wird.

Der Flüssigkeitszustand für die Drosselung der Leistung des Hilfsmotors wird dabei vorzugsweise so gewählt, dass die Lenkhilfsvorrichtung trotz der Kenntnis eingedrungener Flüssigkeit noch mit hinreichender Wahrscheinlichkeit voll funktionsfähig ist, so dass der Fahrer - ohne Beeinträchtigung - noch selbst mit dem Kraftfahrzeug eine Werkstatt anfahren kann. Wenn die Wahrscheinlichkeit für Fehlfunktionen der Lenkhilfsvorrichtung einen Grenzwert überschreitet, sollte die Leistung des Hilfsmotors gedrosselt oder die Lenkhilfsvorrichtung ganz abgeschaltet werden, so dass plötzlich auftretende Fehlfunktionen mit hinreichender Wahrscheinlichkeit vermieden werden.

Weitere praktische Ausführungsformen der Erfindung sind nachfolgend im Zusammenhang mit den Zeichnungen beschrieben. Es zeigen:
- Fig. 1: eine erfindungsgemäße Lenkhilfsvorrichtung in einer perspektivischen Ansicht von schräg vorne,
- Fig. 2: den mit II gekennzeichneten Ausschnitt der erfindungsgemäßen Lenkhilfsvorrichtung aus Fig. 1 mit einem zum Teil transparent dargestellten Gehäuse in einer perspektivischen Ansicht von schräg vorne,
- Fig. 3: den in Fig. 2 gezeigten Ausschnitt der erfindungsgemäßen Lenkhilfsvorrichtung in einer Schnittdarstellung gemäß Ebene III und
- Fig. 4: Mittel zur Detektion von Feuchtigkeit in Form von Motorkontakten der in den Figuren 1-3 dargestellten Lenkhilfsvorrichtung in einer schematischen Darstellung.

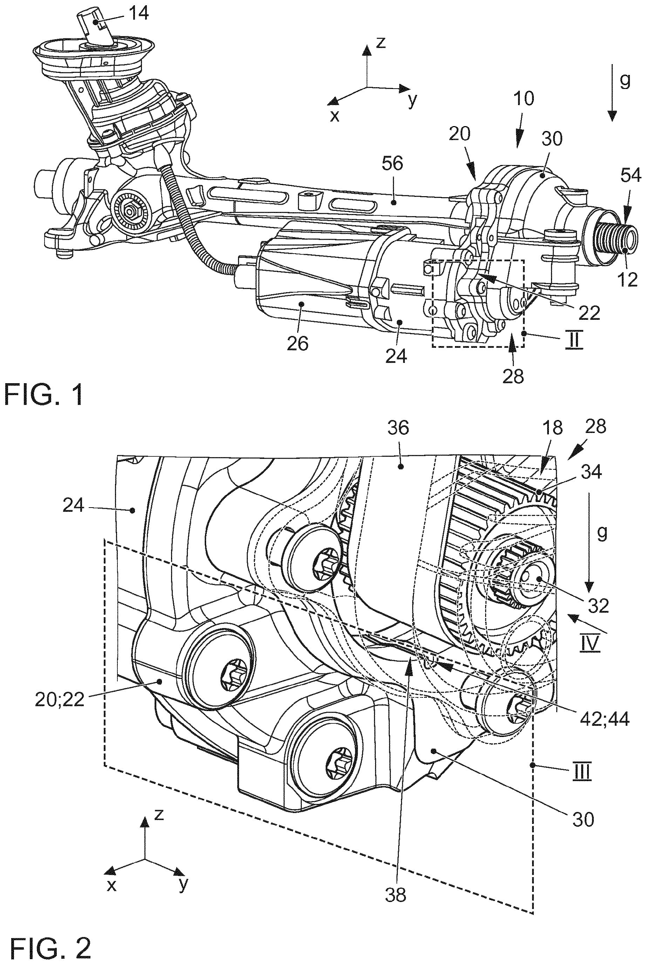

In Fig. 1 ist eine Lenkhilfsvorrichtung 10 eines nicht dargestellten Kraftfahrzeuges dargestellt. Die Lenkhilfsvorrichtung 10 ist im Vorderwagen des Kraftfahrzeuges im Bereich einer lenkbaren Achse eingesetzt. Die Lenkhilfsvorrichtung 10 weist dazu eine sich in Fahrzeugquerrichtung (y-Richtung) erstreckende Lenkstange 12 auf.

Die Lenkstange 12 ist über einen nicht dargestellten Zahnstangenabschnitt funktional mit einer Lenkeingangswelle 14 gekoppelt, um eine (üblicherweise drehende) Lenkbewegung eines nicht dargestellten Lenkrades und eine darauf resultierende Rotation der Lenkeingangswelle 14 mittels eines - ebenfalls nicht dargestellten - Ritzels in eine im Wesentlichen translatorische Bewegung der Lenkstange 12 umzuwandeln. Wie im rechten Bereich der Fig. 1 erkennbar ist, weist die Lenkstange 12 neben dem Zahnstangenabschnitt 56 noch einen Spindelabschnitt 54 auf.

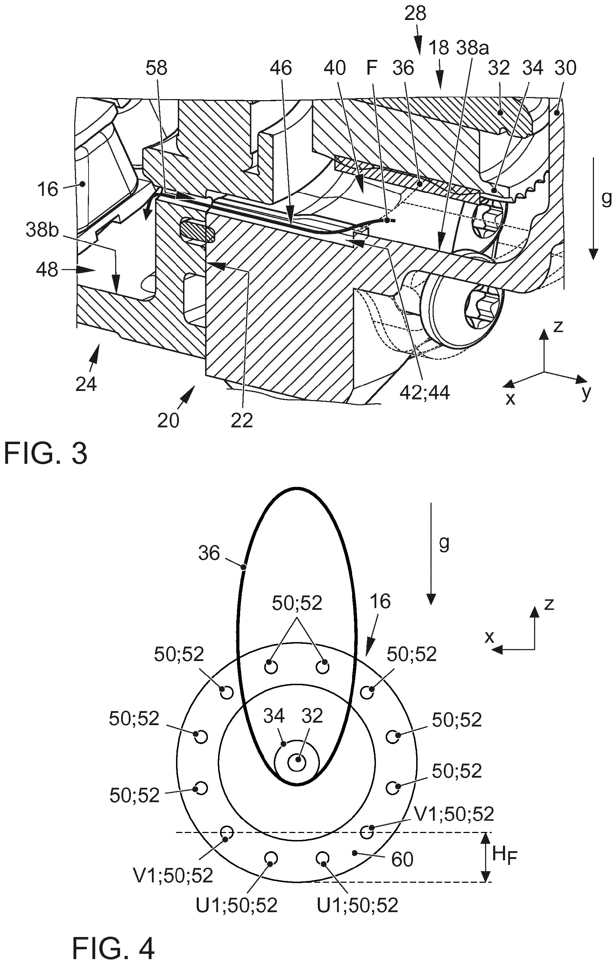

Radial zu der Lenkstange 12 beabstandet ist ein Hilfsmotor 16 angeordnet (vgl. Fig. 3), welcher funktional mittels einer Übertragungsvorrichtung 18 (siehe auch Fig. 2) über den Spindelabschnitt 54 und eine nicht dargestellte Kugelgewindemutter bedarfsweise eine Lenkhilfskraft und/oder ein Lenkhilfsmoment auf die Lenkstange 12 überträgt. Bei dem Hilfsmotor 16 handelt es sich in der gezeigten Ausführungsform um einen elektrisch betriebenen Hilfsmotor 16. Der Hilfsmotor 16 ist in der gezeigten Ausführungsform in Fahrzeughochrichtung (z-Richtung) und in Schwerkraftrichtung g betrachtet unterhalb der Lenkstange 12 angeordnet.

Die Lenkstange 12 ist teilweise in einem die Lenkstange 12 umschließenden Gehäuse 20 angeordnet. Das Gehäuse 20 umfasst in der gezeigten Ausführungsform einen Zahnstangenabschnitt 56, einen Teil eines Übertragungsvorrichtungsgehäuseabschnitts 28, einen Motorgehäuseabschnitt 24 und ein flanschartig ausgebildetes Ende 22 eines Steuereinheitsgehäuseabschnitts 26. Diese Abschnitte 24, 26, 28, 54 können als einstückiges Gehäuse 20 (wie dargestellt) oder auch teilweise separat hergestellt und zu einer Gehäuseeinheit montiert sein.

In dem Steuereinheitsgehäuseabschnitt 26 sind eine nicht dargestellte Kontroll- und Überwachungseinheit und ein Steuergerät für die Lenkhilfsvorrichtung 10 angeordnet.

Die Übertragungsvorrichtung 18 ist dem Übertragungsvorrichtungsgehäuseabschnitt 28 angeordnet, der in der gezeigten Ausführungsform durch das flanschartig ausgebildete Ende 22 und einen dichtend daran angeordneten Gehäusedeckel 30 gebildet ist. Das flanschartige Ende 22 erstreckt sich über den Außenumfang des Gehäuses 20 in einer sich in Fahrzeughochrichtung (z-Richtung) und in Fahrzeuglängsrichtung (x-Richtung) erstreckenden Ebene.

In Fig. 2 ist der untere Teil der Übertragungsvorrichtung 18 gemäß dem in Fig. 1 mit II gekennzeichneten Ausschnitt dargestellt, wobei der Gehäusedeckel 30 teilweise transparent dargestellt ist, um einzelne Elemente der Übertragungsvorrichtung 18 sichtbar zu machen.

Die Übertragungsvorrichtung 18 umfasst ein mit einer Antriebswelle 32 des Hilfsmotors 16 gekoppeltes unteres Riemenrad 34. Korrespondierend dazu ist im Bereich der Lenkstange 12 ein oberes, nicht dargestelltes Riemenrad angeordnet. Das untere Riemenrad 34 und das obere Riemenrad (nicht dargestellt) sind mittels eines als Zugmittel dienenden Riemens 36 miteinander gekoppelt.

Wie sich bereits aus dem Begriff "unteres" Riemenrad 34 ergibt, ist das untere Riemenrad 34 in Fahrzeughochrichtung (z-Richtung) und in Schwerkraftrichtung g betrachtet tiefer angeordnet, als das nicht gezeigte zweite Riemenrad.

Wie in Fig. 2 und 3 gut zu sehen ist, ist die Übertragungsvorrichtung 18 von dem Übertragungsvorrichtungsgehäuseabschnitt 28 und dem Gehäusedeckel 30 - abgesehen von der Öffnung mit dem herausragenden Spindelabschnitt 54 - vollständig umschlossen und somit geschützt vor äußeren Einflüssen angeordnet. Auf das in Fig. 1 rechts dargestellte Ende des Gehäusedeckels 30 wird üblicherweise ein nicht dargestellter Faltenbalg aufgeschoben, um einem Eindringen von Feuchtigkeit einschließlich Spritzwasser entgegenzuwirken.

Wie bereits erläutert, kann Feuchtigkeit - insbesondere im Fall von defekten Faltenbälgen - in den Übertragungsvorrichtungsgehäuseabschnitt 28 und somit in den Bereich des Riemens 36 gelangen. Die gleiche Gefahr besteht, wenn der Gehäusedeckel 30 nicht oder nicht mehr vollständig dichtend an dem flanschartigen Ende 22 des Übertragungsvorrichtungsgehäuseabschnitts 28 angeordnet ist.

Zur Ableitung von in das Gehäuse 20 eingetretener Feuchtigkeit, insbesondere in Form von Flüssigkeiten wie Spritzwasser, sind in dem Bodenbereich 28 des Gehäuses 20 geneigte Flächen in Form von Ablaufschrägen 40 ausgebildet, welche Flüssigkeiten unter Ausnutzung der Schwerkraft g zu einem als Ablaufpfad 42 dienenden Fließkanal 44 leiten. In der gezeigten Ausführungsform ist der Fließkanal 44 in dem Bereich unterhalb des unteren Riemenrades 34 in Form einer Vertiefung und in einem sich in Richtung Motorgehäuseabschnitt 24 anschließenden Bereich als Durchgangsöffnung ausgebildet. In der gezeigten Ausführungsform sind alle den Fließkanal 44 umgebenden Flächen im Bodenbereich 38b des Übertragungsvorrichtungsgehäuseabschnitts 28 in Richtung Fließkanal 44 geneigt. Der gesamte Übertragungsvorrichtungsgehäuseabschnitt 28 sowie der Gehäusedeckel 30 sind derart ausgebildet, dass alle Flächen gegenüber der Horizontalen derart geneigt sind, dass Flüssigkeiten, insbesondere Wasser, in den Motorgehäuseabschnitt 24 gefördert wird. Der Bodenbereich 38a des Motorgehäuseabschnitts 24 ist dementsprechend tiefer angeordnet als der Bodenbereich 38b des Übertragungsvorrichtungsgehäuseabschnitts 28.

In der in Fig. 3 gezeigten Schnittdarstellung ist auch schematisch dargestellt, wie Flüssigkeit in Richtung des Pfeils F aus dem Bodenbereich 38a des Übertragungsvorrichtungsgehäuseabschnitts 28 über den Ablaufpfad 42 zu dem Motorgehäuseabschnitt 24 gefördert werden soll. Wie in Fig. 3 erkennbar ist, sind dazu in dem Übertragungsvorrichtungsgehäuseabschnitt 28, hier im Gehäusedeckel 30, eine kanalartige Vertiefung 46 und in dem Gehäuse 20 eine in den Motorgehäuseabschnitt 24 führende Durchgangsöffnung 58 ausgebildet.

Der Ablaufpfad 42 führt insoweit von dem Bodenbereich 38a des Übertragungsvorrichtungsgehäuseabschnitts 28 zu dem Bodenbereich 38b des Motorgehäuseabschnitts 24.

In dem Motorgehäuseabschnitt 24 ist ein Feuchtigkeitssammelabschnitt 48 ausgebildet. Flüssigkeit, die in das Gehäuse 20 eindringt, wird dementsprechend aufgrund der Gestaltung des Gehäuseinneren, insbesondere im Bodenbereich 38a des Übertragungsvorrichtungsgehäuseabschnitts 28 zu dem Feuchtigkeitssammelabschnitt 48 geleitet. Eine Ansammlung von Flüssigkeit im Bereich des unteren Riemenrades 34 und auch im Bereich des nicht dargestellten oberen Riemenrades kann so wirksam vermieden werden.

Der Feuchtigkeitssammelabschnitt 48 schließt den in Fahrzeughochrichtung (z-Richtung) bzw. in Richtung der Schwerkraft g betrachtet tiefsten Punkt des Innenraums des die Lenkhilfsvorrichtung 10 umgebenden Gehäuses 20 ein.

Wie im Folgenden mit Hilfe von Fig. 4 erläutert wird, werden in der gezeigten Ausführungsform als Mittel zur Detektion von Feuchtigkeit 50 Motorkontakte 52 des in dem Motorgehäuse 24 angeordneten Hilfsmotors 16 genutzt. Die Motorkontakte 52 sind dazu hier in dem Motorgehäuseabschnitt 24 entsprechend auch bis in den Feuchtigkeitssammelabschnitt 48 hineinragend angeordnet.

In Fig. 4 ist schematisch der Hilfsmotor 16 mit seiner Antriebswelle 32, seinem Rotor 60, dem unteren Riemenrad 34 und dem Riemen 36 in einer Ansicht gemäß dem Pfeil IV in Fig. 2 dargestellt.

Der Hilfsmotor 16 weist hier insgesamt zwölf, als Mittel zur Detektion von Feuchtigkeit 50 nutzbare Motorkontakte 52 auf, die kreisförmig über den Umfang verteilt angeordnet sind. Die Motorkontakte 52 sind unterschiedlichen Phasen des Hilfsmotors 16 zugeordnet, hier mit U, V und W bezeichneten Phasen. Mit H_{F} ist in Fig. 4 beispielhaft ein Flüssigkeitsstand in dem Feuchtigkeitssammelabschnitt 48 eingezeichnet, bei welchem jeweils die untersten vier Motorkontaktpaarungen U1 und V1 jeweils durch die Flüssigkeit kurzgeschlossen werden.

Mittels der Kontroll- und Überwachungseinheit und dem damit funktional verbundenen Steuergerät kann der Strom und/oder der Widerstand zwischen jeweils zwei Motorkontakten 52 überwacht und beobachtet werden. Befindet sich mindestens eine Motorkontaktpaarung U1 und V1 innerhalb der Flüssigkeit, kann aus der Reihenfolge und Anzahl von Kurzschlüssen zwischen jeweils zwei oder mehreren Motorkontakten 52 mit Hilfe des Steuergeräts die Höhe des Flüssigkeitsstandes ermittelt werden. Im Betrieb der Lenkhilfsvorrichtung 10 rotiert der Hilfsmotor 16, so dass jeweils unterschiedliche Motorkontakte 52 innerhalb der Flüssigkeit angeordnet sind. Vor diesem Hintergrund ist es sinnvoll, zumindest eine Motorkontaktpaarung U1 und V1 in Umfangsrichtung des Rotors 60 betrachtet unmittelbar nebeneinander anzuordnen, wenn sehr geringe Flüssigkeitsmengen detektiert werden sollen.

Liegt der Flüssigkeitstand über einem vorgegebenen ersten Niveau, das über die Anordnung und Überwachung der Motorkontakte 52 vorgegeben werden kann, wird bedarfsweise mittels der Kontroll- und Überwachungseinheit ein Signal an den Fahrer gegeben, dass Feuchtigkeit in das Gehäuse 20 der Übertragungsvorrichtung 18 eingedrungen ist und gegebenenfalls eine Fachwerkstatt aufgesucht werden soll. Überschreitet der Flüssigkeitsstand ein vorgegebenes zweites Niveau, so kann die Kontroll- und Überwachungseinheit eine Drosselung der Leistung des Hilfsmotors 16 oder sogar eine vollständige Abschaltung des Hilfsmotors 16 veranlassen. Im letztgenannten Fall wird keine Lenkhilfskraft und auch kein Lenkhilfsmoment mehr bereitgestellt, so dass der Fahrer des Kraftfahrzeuges für Lenkvorgänge das erforderliche Lenkmoment vollständig manuell aufbringen muss.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

Diesbezüglich wird insbesondere darauf verwiesen, dass als Übertragungsvorrichtungen 18 nicht nur Riementriebe, sondern auch andere Antriebe vorgesehen sein können, für welche die Detektion von Feuchtigkeit sinnvoll genutzt werden kann. Insoweit wird beispielsweise auf Kettenantriebe verwiesen, die im Falle des Eintritts von Feuchtigkeit möglicherweise vorzeitig gewartet werden sollten.

### Bezugszeichenliste

- 10: Lenkhilfsvorrichtung
- 12: Lenkstange
- 14: Lenkeingangswelle
- 16: Hilfsmotor
- 18: Übertragungsvorrichtung
- 20: Gehäuse
- 22: flanschartiges Ende
- 24: Motorgehäuseabschnitt
- 26: Steuereinheitsgehäuseabschnitt
- 28: Übertragungsvorrichtungsgehäuseabschnitt
- 30: Gehäusedeckel
- 32: Antriebswelle
- 34: unteres Riemenrad
- 36: Riemen
- 38a: Bodenbereich des Motorgehäuseabschnitts
- 38b: Bodenbereich des Übertragungsgehäuseabschnitts
- 40: Ablaufschräge
- 42: Ablaufpfad
- 44: Fließkanal
- 46: Vertiefung
- 48: Feuchtigkeitssammelabschnitt
- 50: Mittel zur Detektion von Feuchtigkeit
- 52: Motorkontakt
- 54: Spindelabschnitt
- 56: Zahnstangenabschnitt
- 58: Durchgangsöffnung
- 60: Rotor

## Patentansprüche

1. Lenkhilfsvorrichtung eines Kraftfahrzeuges mit einer sich in Fahrzeugquerrichtung erstreckenden Lenkstange (12) und einem Hilfsmotor (16), welcher funktional mittels einer Übertragungsvorrichtung (18) mit der Lenkstange (12) gekoppelt ist, um bedarfsweise eine Lenkhilfskraft und/oder ein Lenkhilfsmoment auf die Lenkstange (12) zu übertragen, wobei die Übertragungsvorrichtung (18) zumindest teilweise in einem Gehäuse (20) angeordnet ist, welches sich bis in einen Bereich unterhalb der Übertragungsvorrichtung (18) erstreckt, wobei in dem Gehäuse (20) mindestens ein Mittel zur Detektion von Feuchtigkeit (50) derart angeordnet ist, dass Feuchtigkeit in einem Bodenbereich (38b) des Gehäuses (20) detektierbar ist, wobei das mindestens eine Mittel zu Detektion von Feuchtigkeit (50) in einem Feuchtigkeitssammelabschnitt (48) des Gehäuses (20) angeordnet ist, wobei in dem Bodenbereich (38b) des Gehäuses (20) mindestens eine Ablaufschräge (40) und/oder mindestens ein Fließkanal (44) ausgebildet ist, **dadurch gekennzeichnet,**
**dass** mindestens zwei Motorkontakte (52) des Hilfsmotors (16) in fluidaler Verbindung zu dem Feuchtigkeitssammelabschnitt (48) oder unmittelbar in dem Feuchtigkeitssammelabschnitt (48) angeordnet sind und diese Motorkontakte (52) als Mittel zur Detektion von Feuchtigkeit (50) ausgelegt sind.

2. Lenkhilfsvorrichtung nach dem vorstehenden Anspruch, **dadurch gekennzeichnet, dass** die Übertragungsvorrichtung (18) mindestens ein Riemenrad (34) umfasst und das Riemenrad (34) innerhalb des Gehäuses (20) angeordnet ist.

3. Lenkhilfsvorrichtung nach einem der vorstehenden Ansprüche, **dadurch gekennzeichnet, dass** der Feuchtigkeitssammelabschnitt (48) im Bereich des Hilfsmotors (16) angeordnet ist.

4. Lenkhilfsvorrichtung nach einem der vorstehenden Ansprüche, **dadurch gekennzeichnet, dass** die Mittel zur Detektion von Feuchtigkeit (50) funktional mit einer Kontroll- und Überwachungseinheit gekoppelt sind, mittels welcher zumindest das Erreichen eines bestimmten Flüssigkeitsstandes ermittelbar ist.

5. Lenkhilfsvorrichtung nach dem vorstehenden Anspruch, **dadurch gekennzeichnet, dass** die Kontroll- und Überwachungseinheit funktional mit einem Steuergerät der Lenkhilfsvorrichtung (10) verbunden ist.

6. Verfahren zum Überwachen einer Lenkhilfsvorrichtung (10) eines Kraftfahrzeuges nach einem der Ansprüche 1 bis 5, **dadurch gekennzeichnet, dass** nach einem Erreichen eines bestimmten Flüssigkeitsstandes in dem Gehäuse (20) ein akustisches, optisches und/oder haptisches Signal abgegeben wird und/oder dass nach Erreichen eines bestimmten Flüssigkeitsstandes die Leistung des Hilfsmotors (18) gedrosselt oder der Hilfsmotor (18) abgeschaltet wird.

7. Verfahren nach dem vorstehenden Anspruch, **dadurch gekennzeichnet, dass** nach Erreichen eines ersten Flüssigkeitszustandes in dem Gehäuse (20) die Leistung des Hilfsmotors (18) gedrosselt wird und nach Erreichen eines zweiten, höheren Füllstandes in dem Gehäuse (20) der Hilfsmotor (18) abgeschaltet wird.

## Claims

1. A steering assistance device of a motor vehicle with a steering rod (12) extending in a vehicle transverse direction and with an auxiliary engine (16) that is coupled functionally by means of a transmission device (18) with the steering rod (12), in order to transmit, if necessary, steering assistance power and/or steering assistance torque to the steering rod (12), wherein the transmission device (18) is arranged at least partially in a housing (20) that extends into an area below the transmission device (18), in which in the housing (20) at least one means for detecting humidity (50) is so arranged that humidity is detectable in a bottom area (38b) of the housing (20), wherein the at least one means for detecting humidity (50) is arranged in a humidity collecting portion (48) of the housing (20), wherein in the bottom area (38b) of the housing (20) at least one slant (40) and/or at least one flow channel (44) is configured,
**characterized in that**
at least two engine contacts (52) of the auxiliary engine (16) are connected fluidly to the humidity collecting portion (48) or are arranged directly in the humidity collecting portion (48) and these engine contacts (52) are configured as means for detecting humidity (50).

2. The steering assistance device according to the preceding claim, **characterized in that** the transmission device (18) comprises at least one belt wheel (34) and the belt wheel (34) is arranged inside the housing (20).

3. The steering assistance device according to one of the preceding claims, **characterized in that** the humidity collecting portion (48) is arranged in the area of the auxiliary engine (16).

4. The steering assistance device according to one of the preceding claims, **characterized in that** the means for detecting humidity (50) is coupled functionally with a control and monitoring unit by means of which at least the reaching of a given fluid level is detectable.

5. The steering assistance device according to the preceding claim, **characterized in that** the control and monitoring unit is connected functionally to a control unit of the steering assistance device (10).

6. A method for monitoring a steering assistance device (10) of a motor vehicle according to one of claims 1 to 5,
**characterized in that**, after a given fluid level has been reached in the housing (20), an acoustic, optical and/or haptic signal is emitted and/or after a given fluid level is reached the power of the auxiliary engine (18) is throttled or the auxiliary engine(18)is switched off.

7. The method according to the preceding claim, **characterized in that** after a first fluid level has been reached in the housing (20) the power of the auxiliary engine (18) is throttled and after a second higher filling level in the housing (20) has been reached the auxiliary engine (18) is switched off.

## Revendications

1. Dispositif de direction assistée pour un véhicule automobile avec une barre de direction (12) qui s'étend dans la direction transversale du véhicule automobile et un moteur auxiliaire (16), qui est couplé de manière fonctionnelle avec la barre de direction (12) au moyen d'un dispositif de transmission (18), pour transmettre si nécessaire une force de direction assistée et/ou un moment de direction assistée à la barre de direction (12), dans lequel le dispositif de transmission (18) est agencé au moins partiellement dans un boîtier (20), qui s'étend jusqu'à une zone située sous le dispositif de transmission (18), dans lequel, dans le boîtier (20) au moins un moyen de détection de l'humidité (50) est agencé, de sorte que l'humidité peut être détectée dans une zone de fond (38b) du boîtier (20), dans lequel le au moins un moyen de détection de l'humidité (50) est agencé dans une partie de collecte de l'humidité (48) du boîtier (20), dans lequel dans la zone de fond (38b) du boîtier (20) au moins une inclinaison de sortie (40) et/ou au moins un canal d'écoulement (44) est formé/e,
**caractérisé en ce que**
au moins deux contacts moteur (52) du moteur auxiliaire (16) sont agencés en communication fluide avec la partie de collecte de l'humidité (48) ou directement dans la parie de collecte de l'humidité (48) et ces contacts moteur (52) sont conçus comme moyen de détection de l'humidité (50).

2. Dispositif de direction assistée selon la revendication précédente, **caractérisé en ce que** le dispositif de transmission (18) comprend au moins une roue de poulie (34) et la roue de poulie (34) est agencée à l'intérieur du boîtier (20).

3. Dispositif de direction assistée selon l'une des revendications précédentes, **caractérisé en ce que** la partie de collecte de l'humidité (48) est agencée dans la zone du moteur auxiliaire (16).

4. Dispositif de direction assistée selon l'une des revendications précédentes, **caractérisé en ce que** les moyens de détection de l'humidité (50) sont couplés de manière fonctionnelle avec une unité de contrôle et de surveillance, au moyen de laquelle l'atteinte d'un niveau de liquidité spécifié peut être déterminée.

5. Dispositif de direction assistée selon la revendication précédente, **caractérisé en ce que** l'unité de contrôle et de surveillance est liée de manière fonctionnelle avec un appareil de commande du dispositif de direction assistée (10).

6. Procédé de surveillance d'un dispositif de direction assistée (10) d'un véhicule automobile selon l'une des revendications 1 à 5,
**caractérisé en ce que**, après l'atteinte d'un niveau de liquidité spécifié dans le boîtier (20) un signal acoustique, optique et/ou tactile est émis et/ou **en ce que**, après l'atteinte d'un niveau de liquidité spécifié, la puissance du moteur auxiliaire (18) est réduite ou le moteur auxiliaire (18) est éteint.

7. Procédé selon la revendication précédente, **caractérisé en ce que**, après l'atteinte d'un premier niveau de liquidité dans le boîtier (20) la puissance du moteur auxiliaire (18) est réduite et après l'atteinte d'un deuxième niveau de remplissage supérieur dans le boîtier (20) le moteur auxiliaire (18) est éteint.
